# EUROPEAN PATENT APPLICATION

(11) **EP 4 268 913 A1**
(43) Date of publication of application: **01.11.2023**
(21) Application number: 22823968.7
(22) Date of filing: 11.05.2022
(51) Int. Cl.: A63F 13/426

(54) **POSITION ADJUSTMENT METHOD AND APPARATUS FOR OPERATION CONTROLS, AND TERMINAL, AND STORAGE MEDIUM**

(30) Priority: 18.06.2021 CN 202110680988
(71) Applicant: Tencent Technology (Shenzhen) Company Limited, Shenzhen, Guangdong, 518057 (CN)
(72) Inventor: GUO, Yating, Shenzhen, Guangdong 518057 (CN)
(74) Representative: AWA Sweden AB
(86) International application number: PCT/CN2022/092260
(87) International publication number: WO 2022/262485

(57) **Abstract**

A position adjustment method and apparatus for an operation control, a terminal, and a storage medium are provided, which belong to the technical fields of computers and the Internet. The method includes: displaying a user interface of a game battle in response to a starting operation for the game battle (301); switching an operation control from a locked state to an adjustable state in response to a first state switching operation applied to the operation control (302); adjusting, in the adjustable state, a display position of a first operation control in response to an adjustment operation applied to the first operation control in at least one operation control (303); and controlling, in the adjustable state, a virtual object in the game battle to perform an action associated with the first operation control in response to a trigger operation applied to the first operation control (304).

## Description

### RELATED APPLICATION

This application claims priority to Chinese Patent Application No. 202110680988.0, entitled "POSITION ADJUSTMENT METHOD AND APPARATUS FOR OPERATION CONTROL, TERMINAL, AND STORAGE MEDIUM" filed on June 18, 2021, which is incorporated by reference in its entirety.

### FIELD OF THE TECHNOLOGY

This application relates to the technical fields of computers and the Internet, and in particular, to a position adjustment method and apparatus for an operation control, a device, and a storage medium.

### BACKGROUND OF THE DISCLOSURE

Currently, in a game battle, a plurality of operation controls configured to control virtual objects to perform various actions are displayed. In order to improve user's operation feel in the game battle, a user may adjust a display position of an operation control according to actual needs.

In related technologies, the user adjusts the display position of the operation control through a setting interface. In the setting interface, there is an option for setting the display position of the operation control, and the user may adjust the display position of the operation control in the game battle through an adjustment operation for this option. In addition, a static image of a game battle interface is also displayed in the setting interface. When the user performs the adjustment operation on the foregoing option, the display position of the operation control in the static image is adjusted according to the adjustment operation.

However, in the foregoing related technologies, the user only previews an adjustment effect on the operation control through the static image, needs to start a game battle to perceive the operation feel of the operation control, determines whether the operation control is adjusted to an appropriate display position based on the operation feel, and needs to reopen the setting interface to adjust the display position of the operation control in a case that the operation control is not adjusted to the appropriate display position, so that the efficiency of position adjustment of the operation control is low.

### SUMMARY

Embodiments of this application provide a position adjustment method and apparatus for an operation control, a terminal, and a storage medium, which can improve the efficiency of position adjustment of an operation control and is conductive to the optimization of a position adjustment effect on the operation control. The technical solutions are as follows:

According to an aspect of the embodiments of this application, a position adjustment method for an operation control is provided. The method is performed by a terminal and includes the following steps:
displaying a user interface of a game battle in response to a starting operation for the game battle, the user interface displaying at least one operation control;
switching the operation control from a locked state to an adjustable state in response to a first state switching operation applied to the operation control;
adjusting, in the adjustable state, a display position of a first operation control in response to an adjustment operation applied to the first operation control of the at least one operation control; and
controlling, in the adjustable state, a virtual object in the game battle to perform an action associated with the first operation control in response to a trigger operation applied to the first operation control.

According to an aspect of the embodiments of this application, a position adjustment apparatus for an operation control is provided. The apparatus includes:
an interface display module, configured to display a user interface of a game battle in response to a starting operation for the game battle, the user interface displaying at least one operation control;
a state switching module, configured to switch the operation control from a locked state to an adjustable state in response to a first state switching operation applied to the operation control;
a position adjustment module, configured to adjust, in the adjustable state, a display position of a first operation control in response to an adjustment operation applied to the first operation control of the at least one operation control; and
an object control module, configured to control, in the adjustable state, a virtual object in the game battle to perform an action associated with the first operation control in response to a trigger operation applied to the first operation control.

According to an aspect of the embodiments of this application, a terminal is provided. The terminal includes a processor and a memory, the memory stores at least one fragment of program, and the at least one fragment of program is loaded and executed by the processor to perform the foregoing position adjustment method for an operation control.

According to an aspect of the embodiments of this application, a computer-readable storage medium is provided. The readable storage medium stores at least one fragment of program, and the at least one fragment of program is loaded and executed by a processor to perform the foregoing position adjustment method for an operation control.

According to an aspect of the embodiments of this application, a computer program product or computer program is provided. The computer program product or computer program includes computer instructions, and the computer instructions are stored in a computer-readable storage medium. A processor of a terminal reads the computer instructions from the computer-readable storage medium and executes the computer instructions to cause the terminal to perform the foregoing position adjustment method for an operation control.

The operation control is switched from the locked state to the adjustable state through the first state switching operation, and in the adjustable state, the display position of the operation control can be adjusted in response to the adjustment operation and the virtual object can be controlled to perform the corresponding action in response to the trigger operation. That is, in a case that a user adjusts the display position of the operation control, the operation control can respond to user's trigger operation, so that the user can control the virtual object. In this way, after adjusting the display position of the operation control, the user can use the operation control in real time and then determine whether the use feel of the operation control meets user's needs. Furthermore, during use of the operation control, the operation control is still in the adjustable state, and in a case that user is not satisfied with a previous position adjustment result, the user may continue to adjust the display position of the operation control without reopening a setting interface of the operation control, which improves the efficiency of position adjustment of the operation control. Moreover, during position adjustment, the operation feel of the operation control is determined by using the operation in real time, which is conductive to the optimization of a position adjustment effect on the operation control.

### BRIEF DESCRIPTION OF THE DRAWINGS

FIG. 1 is a schematic diagram of a running environment of an application program according to an embodiment of this application.
FIG. 2 is a schematic diagram of an example of a user interface during adjustment of an operation control.
FIG. 3 is a flowchart of a position adjustment method for an operation control according to an embodiment of this application.
FIG. 4 is a schematic diagram of an example of display styles of a first operation control in different states.
FIG. 5 is a schematic diagram of an example of a user interface during adjustment of another operation control.
FIG. 6 is a flowchart of a position adjustment method for an operation control according to another embodiment of this application.
FIG. 7 is a schematic flowchart of a position adjustment method for an operation control.
FIG. 8 is a flowchart of a position adjustment method for an operation control according to still another embodiment of this application.
FIG. 9 is a block diagram of a position adjustment apparatus for an operation control according to an embodiment of this application.
FIG. 10 is a block diagram of a position adjustment apparatus for an operation control according to another embodiment of this application.
FIG. 11 is a structural block diagram of a terminal according to an embodiment of this application.

### DESCRIPTION OF EMBODIMENTS

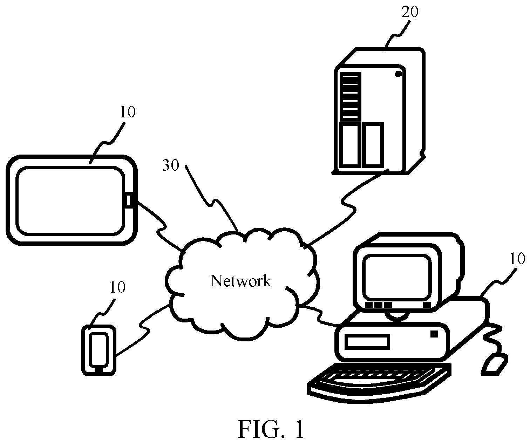

Referring to FIG. 1, a schematic diagram of a running environment of an application program according to an embodiment of this application is shown. The running environment of the application program includes: a terminal 10 and a server 20.

The terminal 10 is also referred to as a terminal device, and may be an electronic device such as a mobile phone, a tablet computer, a game console, an e-book reader, a multimedia playback device, a wearable device, and a personal computer (PC). A client of a target application program may be installed in the terminal 10, and the target application program may be any application program capable of displaying an operation control. For example, the target application program may be a game application program, a social application program, a reading application program, a shopping application program, and the like. The target application program may be an application program that needs to be downloaded and installed, or may be a click-to-run application program, which is not defined in the embodiments of this application.

The server 20 is configured to provide backend services for the client of the target application program in the terminal 10. For example, the server 20 may be a backend server for the foregoing target application program. The server 20 may be a server, or may be a server cluster including a plurality of servers, or a cloud computing service center. In some embodiments, the server 20 provides backend services for target application programs in a plurality of terminals 10.

The terminal 10 and the server 20 may communicate with each other through a network 30.

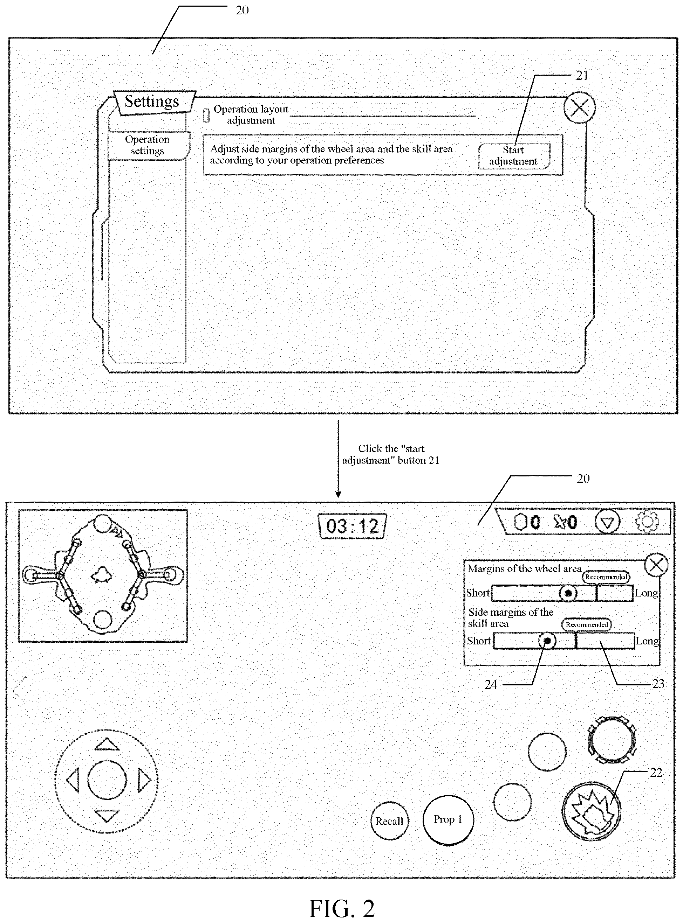

Optionally, in the embodiments of this application, the foregoing operation control is an operation control whose display position is adjustable. As shown in FIG. 2, a user interface 20 displays a "start adjustment" button 21 for an operation control. After a use clicks the "start adjustment" button 21, the operation control is switched from a locked state (e.g., a fixed state, i.e., the operation control is at a fixed position) to an adjustable state, and various operation controls and position adjustment progress bar respectively associated with the operation controls are displayed in the user interface 20. Taking a first operation control 22 as an example, the user adjusts a display position of the first operation control 22 in the user interface 20 by adjusting a position marker 24 in a position adjustment progress bar 23.

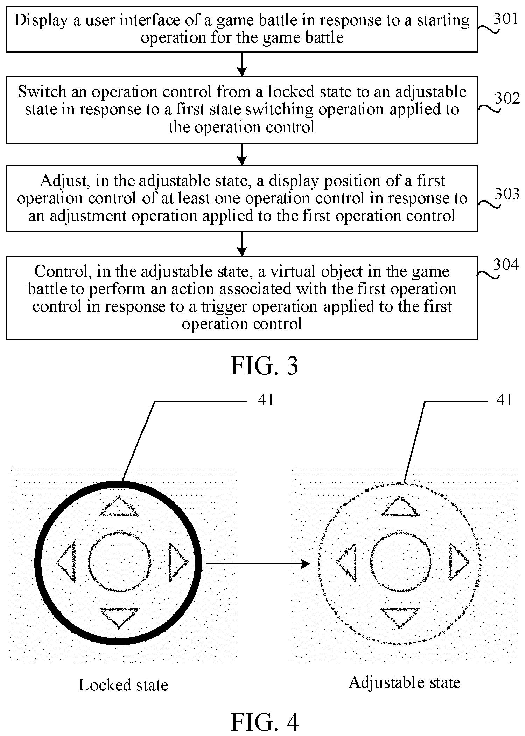

Referring to FIG. 3, a flowchart of a position adjustment method for an operation control according to an embodiment of this application is shown. The method is applicable to the terminal 10 in the running environment of the application program shown in FIG. 1. For example, an execution entity of each step may be a client of a target application program that is installed and run in the terminal 10. The method may include at least one of the following steps (301 to 304):

Step 301: Display a user interface of a game battle in response to a starting operation for the game battle.

The starting operation is an operation that is triggered and generated by a user to start a game battle. In some embodiments, the user triggers and generates the foregoing starting operation through a trigger operation applied to a game battle starting control. The game battle starting control is displayed in the user interface after the foregoing target application program is run. For example, after the target application program is run, the game battle starting control is displayed in an interface of the target application program, and a user interface of a game battle is displayed in the interface in a case that a trigger operation of the user for the game battle starting control is detected. In some embodiments, the target application program may provide the user with different modes of game battles, such as an "instant kill game mode", a "5v5 game mode", and a "3v3 game mode". Before starting a game battle, the user may select a mode of a game battle in a mode selection interface, and then a user interface of a game battle of a certain mode is displayed in a case that the client detects a starting operation for the game battle of the mode. A starting operation for a game battle of a certain mode is a trigger operation applied to a game battle starting control of the mode.

In some embodiments, display contents in user interfaces for different modes of game battles are different. For example, different modes provide the user with different interaction scenes (also referred to as virtual environments, virtual scenes, and the like). In addition, display contents in user interfaces for different game battles of the same mode may also be different. For example, for the same mode, the content contained in each game battle is different. The content contained in the game battle includes, but is not limited to, at least one of: a virtual object controlled by a user, a virtual object controlled by a computer program, and a virtual item in a virtual environment. The foregoing virtual object controlled by a user may be selected from a plurality of virtual objects by the user, and different virtual objects correspond to different appearances and/or skills. The foregoing virtual item in a virtual environment may be a virtual item randomly allocated to a game battle.

In the embodiments of this application, in a case that the client detects a starting operation for a game battle, the client displays a user interface of the game battle. The user interface is configured to show a user the content of the game battle. In some embodiments, user interfaces for different game battles are displayed in different ways.

In a possible embodiment, in order to ensure the timeliness of displaying the user interface, when displaying the user interface of the game battle, the client renders the user interface according to display elements stored in the client to display the foregoing user interface of the game battle. In some embodiments, the foregoing stored display elements are stored during download of a target application program, that is, the client displays the foregoing user interface according to information stored during download of the target application program. Alternatively, the foregoing stored display elements are stored after a previous game battle is started, that is, the client displays the foregoing user interface according to information stored in the last game battle. Of course, in an exemplary embodiment, in a case that no game battle is started, the client may obtain new display elements from the server at certain time intervals, and updates the previously stored display elements with the new display elements. When updating the previously stored display elements, the client may directly overwrite the previously stored display elements with the new display elements, or may obtain display elements, different from the previously stored display elements, from the new display elements, and performs an operation, such as addition, deletion, and replacement, on the different display elements.

In another possible embodiment, in order to ensure the consistency of user interfaces displayed to different users, when displaying the user interface of the game battle, the client obtains display elements of the user interface through the server, and renders the user interface through the display elements so as to display the foregoing user interface of the game battle.

The foregoing display elements include, but are not limited to, at least one of: a text element, an image element, a sound element, and the like.

In the embodiments of this application, the foregoing user interface displays at least one operation control. In some embodiments, the operation control is directly displayed or displayed in an implicit way in the user interface.

In a possible embodiment, the foregoing operation control is directly displayed in the user interface. In some embodiments, when displaying the foregoing user interface, the client renders and displays an operation control in the user interface based on display elements for the operation control. The display elements for the operation control may be rendered and displayed in a trigger region for the operation control.

In another possible embodiment, the foregoing operation control is displayed in an implicit way in the user interface. In some embodiments, when displaying the foregoing user interface, the client does not need to obtain the display elements of the operation control, and determines a trigger region for the operation control only, so as to ensure that an action associated with a corresponding operation control in a case that a trigger operation for the trigger region is detected subsequently.

Of course, in other possible embodiments, the foregoing operation control is displayed in a semi-implicit way in the user interface. In some embodiments, when displaying the foregoing user interface, the client does not need to obtain display elements of an operation control, determines a trigger region for the operation control only, and displays the operation control associated with the trigger region in the user interface when detecting a trigger operation for the trigger region.

Step 302: Switch the operation control from a locked state to an adjustable state in response to a first state switching operation applied to the operation control.

The locked state refers to a state in which a display position of the operation control is locked. The adjustable state refers to a state in which the display position of the operation control is moveable. The first state switching operation refers to an operation that is triggered by a user to switch a current state of the operation control. In some embodiments, the user triggers and generates the foregoing first state switching operation through a trigger operation applied to a state switching control. The trigger operation may be a short-press operation, a long-press operation, a single-click operation, a double-click operation, a drag operation, a voice operation, and the like, which is not defined in the embodiments of this application.

In the embodiments of this application, in a case that the client detects the first state switching operation applied to the operation control, the client switches the operation control from the locked state to the adjustable state. In some embodiments, display styles for the operation control in different states are different.

In some embodiments, after a game battle is started, the operation control is in the locked state, and at this moment, the operation control is displayed in a first display style in the user interface. Then, the client detects the foregoing first state switching operation, switches the operation control from the locked state to the adjustable state according to the first state switching operation, and switches the display style of the operation control from the first display style to a second display style. Differences between the first display style and the second display style include, but are not limited to, at least one of: different colors, different lines, different textures, different patterns, different rendering effects, and the like. For example, as shown in FIG. 4, in a case that the operation control 41 is in the locked state, the operation control 41 is displayed in the form of a solid line; and in a case that the operation control is in the adjustable state, the operation control 41 is displayed in the form of a dotted line.

Step 303: Adjust, in the adjustable state, a display position of a first operation control in response to an adjustment operation applied to the first operation control of the at least one operation control.

In the embodiments of this application, in the foregoing adjustable state, in a case that the client detects an adjustment operation applied to a first operation control in at least one operation control, the client adjusts a display position of the first operation control. The first operation control may be any operation control in the at least one operation control, and the adjustment operation may be an operation triggered and generated by the user. For example, the adjustment operation may be a short-press operation, a long-press operation, a single-click operation, a double-click operation, a drag operation, a voice operation, and the like, which is not defined in the embodiments of this application.

Optionally, in the embodiments of this application, the foregoing first state switching operation corresponds to a second state switching operation. After adjusting the display position of the foregoing first operation control, the client switches the first operation control from the adjustable state to the locked state in a case that the clients detect a second state switching operation applied to the first operation control, and transmits position adjustment information to the server. The position adjustment information is used for instructing the server to record a current display position of the first operation control, so that the client displays the first operation control based on the current display position of the first operation control that is recorded this time when a next game battle is started.

In some embodiments, the foregoing second state switching operation and the foregoing first state switching operation may be triggered and generated through the same trigger operation applied to the same state switching control. For example, after detecting a trigger operation applied to the state switching control, the client determines that the trigger operation is the first state switching operation in a case that the operation control is in the locked state; and determines that the trigger operation is the second state switching operation in a case that the operation control is in the adjustable state.

In some embodiments, the foregoing second state switching operation and the foregoing first state switching operation correspond to the same state switching control and different trigger operations, that is, the second state switching operation and the first state switching operation may be triggered and generated through different trigger operations for the same state switching control. For example, after detecting a trigger operation applied to the state switching control, the client obtains attribute information of the trigger operation, and determines that the trigger operation is the first state switching operation in a case that the attribute information includes first attribute information (such as clicking once, pressing for less than a certain value, and dragging to the left); and determines that the trigger operation is the second state switching operation in a case that the attribute information includes second attribute information (such as clicking twice, pressing for greater than a certain value, and dragging to the right).

In some embodiments, the foregoing second state switching operation and the foregoing first state switching operation correspond to different state switching controls, that is, the second state switching operation and the first state switching operation may be triggered and generated through trigger operations for different state switching controls. For example, in a case that the client detects a trigger operation applied to a first state switching control, the client determines that the trigger operation is the first state switching operation; and in a case that the client detects a trigger operation applied to a second state switching control, the client determines the trigger operation is the second state switching operation. A relative position between the foregoing first state switching control and the foregoing second state switching control may be any relative position, which is not defined in the embodiments of this application.

Optionally, the foregoing second state switching operation and the foregoing first state switching operation correspond to the same state switching control and the same trigger operation, that is, the second state switching operation and the first state switching operation may be triggered and generated through the same trigger operation applied to the same state switching control. For example, after detecting a trigger operation applied to the state switching control, the client determines that the first state switching operation applied to the operation control is detected in a case that the operation control is in the locked state; and correspondingly, after detecting a trigger operation applied to the state switching control, the client determines that the second state switching operation applied to the operation control is detected in a case that the operation control is in the adjustable state.

Step 304: Control, in the adjustable state, a virtual object in the game battle to perform an action associated with the first operation control in response to a trigger operation applied to the first operation control.

In the embodiments of this application, in the foregoing adjustable state, in a case that the client detects a trigger operation applied to the first operation control, the client controls a virtual object in the game battle to perform an action associated with the first operation control. The foregoing virtual object is a virtual object controlled by a user account, and the user account may control one or more virtual objects, which is not defined in the embodiments of this application. The foregoing trigger operation may be a single-click operation, a double-click operation, a long-press operation, a short-press operation, a slide operation, and the like, which is not defined in the embodiments of this application.

In some embodiments, different operation controls correspond to different trigger operations. For example, in a case that the first operation control is an operation control configured to control a virtual object to cast a skill, the foregoing trigger operation may be a click operation. When detecting the click operation applied to the first operation control, the client controls the virtual object to cast a corresponding skill. In a case that the first operation control is a slider configured to control a virtual object to move, the foregoing trigger operation may be a slide operation. When detecting the slide operation applied to the first operation control, the client determines that a slide direction of the slide operation is a movement direction of the virtual object, and controls the virtual object to move; and the like. In addition, in an exemplary embodiment, the same operation control may correspond to different trigger operations, and different trigger operations correspond to different actions. For example, in a case that the first operation control corresponds to a single-click operation and a double-click operation, when detecting the single-click operation applied to the first operation control, the client switches the virtual object from a standing posture to a squatting posture, and when detecting the double-click operation applied to the first operation control, the client switches the virtual object from a standing posture to a lying posture.

Optionally, in the embodiments of this application, the first operation control corresponds to a trigger region, and in a case that the client detects a trigger operation, the client obtains a trigger position of the trigger operation and then determines whether the trigger operation is located in the trigger region of the first operation control based on the trigger position. In a case that the trigger operation is located in the trigger region of the first operation control, it is determined that the trigger operation is a trigger operation applied to the first operation control, and the virtual object is controlled to perform a corresponding action. The foregoing trigger region is larger than or equal to a display region of the first operation control. For example, the trigger region is a region formed by a set of points whose distances to a center point of the first operation control are less than a target value.

Based on the above, in the technical solutions provided in the embodiments of this application, the operation control is switched from the locked state to the adjustable state through the first state switching operation, and in the adjustable state, the display position of the operation control can be adjusted in response to the adjustment operation and the virtual object can be controlled to perform the corresponding action in response to the trigger operation. That is, in a case that a user adjusts the display position of the operation control, the operation control can respond to user's trigger operation, so that the user can control the virtual object. In this way, after adjusting the display position of the operation control, the user can use the operation control in real time and then determine whether the use feel of the operation control meets user's needs. Furthermore, during use of the operation control, the operation control is still in the adjustable state, and in a case that the user is not satisfied with a previous position adjustment result, the user may continue to adjust the display position of the operation control without reopening a setting interface of the operation control, which improves the efficiency of position adjustment of the operation control. Moreover, during position adjustment, the operation feel of the operation control is determined by using the operation control in real time, which is conductive to the optimization of a position adjustment effect on the operation control.

In addition, in the technical solutions provided in the embodiments of this application, the operation control is controlled to switch from the locked state to the adjustable state through the first state switching operation, the virtual object is controlled to perform a corresponding action through a trigger operation, and the operation control is controlled to switch from the adjustable state to the locked state through the second state switching operation, that is, an operation that is used for controlling the state change of the operation control and is different from an operation for controlling a first virtual object to perform an action without interfering each other. When controlling the virtual object to perform an action, the user does not need to take into account the state of the operation control, which improves the flexibility of user operation and the intensity of a game battle. After the operation control is switched from the adjustable state back to the locked state, the server records the position adjustment information of the operation control, and the position adjustment information of this time may be directly obtained from the server in a subsequent game battle, and it is unnecessary to readjust the position of the operation control in each game battle, which simplifies user operations.

A method for adjusting the display position of the first operation control will be described below.

In some embodiments, the client adjusts the display position of the first operation control based on an effect of the adjustment operation. Optionally, in the embodiments of this application, when detecting the first state switching operation applied to the operation control, the client displays an adjustment window. In some embodiments, when detecting the foregoing first state switching operation, the client obtains position information of the foregoing at least one operation control, and displays the foregoing adjustment window based on the position information, so that the adjustment window contains the position information of the at least one operation control.

In some embodiments, the foregoing adjustment window contains a position adjustment control configured to adjust a display position of an operation control, the foregoing adjustment operation is an operation applied to the position adjustment control, and in a case that the client detects the operation applied to the position adjustment control, the client adjusts the display position of the first operation control.

In a possible embodiment, the foregoing position adjustment control includes a position adjustment progress bar, and the position adjustment progress bar displays a position marker. In some embodiments, different operation controls correspond to different position adjustment progress bars, and the different position adjustment progress bars display position markers for corresponding operation controls; or different operation controls correspond to the same position adjustment progress bar, and the position adjustment progress bar displays position markers for the different operation controls. Taking the first operation control as an example, when displaying the foregoing adjustment window, the client obtains the display position of the first operation control in the user interface, and determines a display position, on the position adjustment progress bar, of a position marker for a first operation progress bar. For example, in a case that a distance between a center point of the first operation control and a boundary line of the user interface is equal to half the length of the user interface, the position marker of the first operation control is located in the center of the position adjustment progress bar.

In another possible embodiment, the foregoing position adjustment control includes a user interface thumbnail, and the user interface thumbnail displays the position marker. In some embodiments, different operation controls correspond to different user interface thumbnails, and the different user interface thumbnails display position markers for corresponding operation controls; or different operation controls correspond to the same user interface thumbnail, and the user interface thumbnail displays position markers for different operation controls. Taking the first operation control as an example, when displaying the foregoing adjustment window, the client obtains the display position of the first operation control in the user interface, and determines a display position, on the user interface thumbnail, of a position marker for a first operation progress bar. The user interface thumbnail may be an image obtained by zooming the display content of the user interface in real time, or may be a pre-stored zoomed image of the user interface.

In still another possible embodiment, the foregoing position adjustment control includes position movement buttons for different directions. In some embodiments, different operation controls correspond to different position movement sliders. Taking the first operation control as an example, when displaying the foregoing adjustment window, the client obtains position parameters of the first operation control on the user interface, and the position parameters in the adjustment window are changed with the adjustment of the position of the first operation control when the display position of the first operation control is adjusted through the position movement buttons. The foregoing position parameters include, but are not limited to, at least one of: coordinates of the first operation control on the user interface, a distance between the first operation control and the boundary line of the user interface, a distance between the first operation control and a center line of the user interface, and the like, which is not limited in the embodiments of this application.

Taking that the foregoing position adjustment control includes a position adjustment progress bar and the position adjustment progress bar displays a position marker as an example, in an exemplary embodiment, the foregoing step 303 includes at least one of the following steps:
1. Determine a position of the position marker in the position adjustment progress bar in response to a movement operation applied to the position marker.

Optionally, in the embodiments of this application, the foregoing operation applied to the position adjustment control is a movement operation applied to the position marker, after displaying the foregoing adjustment window, in a case of detecting the movement operation applied to the position marker, the client obtains a position of the position marker in the position adjustment progress bar based on the movement operation.

In a possible embodiment, after detecting the foregoing movement operation, the client obtains an end position of the movement operation on the position adjustment progress bar, and determines that the end position is a position of the position marker on the position adjustment progress bar. Of course, in an exemplary embodiment, the client may also obtain a position of a finger of the user on the adjustment progress bar in real time during the movement operation, and adjusts and displays the position of the position marker in real time.

In another possible embodiment, after detecting the foregoing movement operation, the client obtains a movement distance of the movement operation on the position adjustment progress bar, takes the distance as a movement distance of the position marker on the position adjustment progress bar, and determines a position of the position marker on the position adjustment progress bar. Of course, in an exemplary embodiment, the client may also determine a real-time movement distance of the position marker according to a real-time movement distance of a movement position, and adjusts and displays the position of the position marker in real time.

2. Determine a margin of the first operation control relative to a boundary line of the user interface according to the position of the position marker in the position adjustment progress bar.

In the embodiments of this application, after obtaining the position of the position marker in the position adjustment progress bar, the client determines the margin of the first operation control relative to the boundary line of the user interface according to the position of the position marker in the position adjustment progress bar. The boundary line may be all boundary lines, such as an upper boundary line, a lower boundary line, a left boundary line, and a right boundary line. Alternatively, the boundary line may be two boundary lines perpendicular to each other, such as an upper boundary line and a left boundary line, and an upper boundary line and a right boundary line. Alternatively, the boundary line may be a boundary line closest to the first operation control. Alternatively, the boundary line is related to an adjustment direction of the first operation control, and in a case that the adjustment direction of the first operation control is left-right adjustment and a distance between the first operation control and a right boundary line is less than that between the first operation control and a left boundary line, the foregoing boundary line may be the right boundary line.

In some embodiments, terminals of different modes display user interfaces of different display sizes, when determining the foregoing margin, the client may obtain a display size of the user interface, takes the position marker as a division point, determines a ratio of a length of a progress bar on the right side of the position marker to the total length of the position adjustment progress bar, and determines a margin of the first operation control relative to a boundary line of the user interface according to the ratio and the display size. In this case, the boundary line may be a right boundary line. Similarly, the client may also take the position marker as a division point, determines a ratio of a length of a progress bar on the left side of the position marker to the total length of the position adjustment progress bar, and determines a margin of the first operation control relative to a boundary line of the user interface according to the ratio and the display size. In this case, the boundary line may be a left boundary line.

In a possible embodiment, the length of the position adjustment progress bar corresponds to a target display length of the user interface. When determining the foregoing margin, the client determines a margin of the first operation control relative to a boundary line of the user interface according to a position of the position marker on the position adjustment progress bar and the foregoing target display length. The target display length may be a complete display length of the user interface, or may be a partial display length of the user interface, which is not defined in the embodiments of this application.

In another possible embodiment, correspondence between the length of the position adjustment progress bar and the display length of the user interface is stored in a pre-set list. During determination of the foregoing margin, the client determines correspondence between the length of the position adjustment progress bar and the display length of the user interface according to the pre-stored list, and determines a margin of the first operation control relative to a boundary line of the user interface according to a position of the position marker on the position adjustment progress bar and the foregoing display length.

3. Adjust a display position of the first operation control, so that a distance between the first operation control and the boundary line of the user interface is equal to the margin.

In the embodiments of this application, after obtaining the foregoing margin, the client adjusts the display position of the first operation control according to the margin, so that a distance between the first operation control and the boundary line of the user interface is equal to the margin.

Optionally, in the embodiments of this application, the display position of the first operation control may be adjusted after the position marker is moved, or the display position of the first operation control is adjusted in real time during the movement of the position marker. In a possible embodiment, after the position marker is moved, the client adjusts the display position of the first operation control according to a position of the position marker in the position adjustment progress bar. In another possible embodiment, during the movement of the position marker, the client obtains a position of the position marker in the position adjustment progress bar in real time, and adjusts the display position of the first operation control in real time, which helps the user grasp the position adjustment of the first operation control in real time.

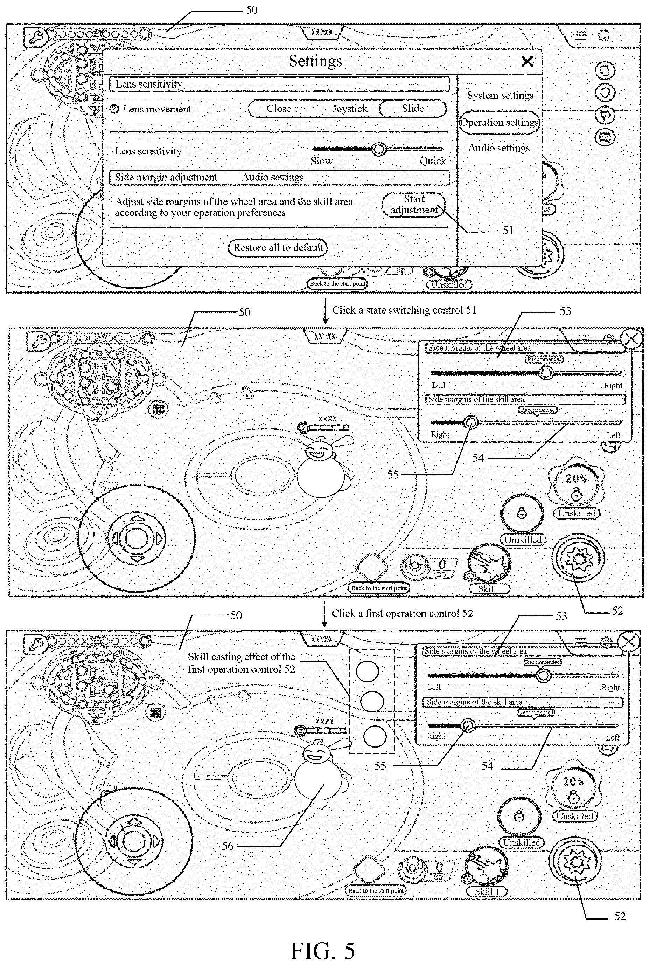

For example, with reference to FIG. 5, the user interface 50 includes a state switching control 51, and the user clicks the state switching control 51 to switch the first operation control 52 from the locked state to the adjustable state. At this moment, the user interface 50 displays an adjustment window 53, the adjustment window 53 includes a position adjustment progress bar 54 of the first operation control 52, the position adjustment progress bar 54 displays a position marker 55 of the first operation control, and the user adjusts the display position of the first operation control 52 through a movement operation applied to the position marker 55. Moreover, after the foregoing position adjustment, the first operation control 52 is kept in the adjustable state, and the user click the first operation control 52 to control a virtual object 56 to cast a skill.

Based on the above, in the technical solutions provided in the embodiments of this application, the display position of the operation control is adjusted through the position adjustment control in the display window, the position of the operation control is adjusted through the display window in the game battle, a position adjustment region is distinguished from a touch region of the operation control to avoid false touches of the trigger operation caused during position adjustment. Moreover, the display position of the operation control is determined according to the position of the position marker in the position adjustment progress bar, the position marker is associated with the display position of the operation control, and compared with the abstract parameter adjustment, the user may more intuitively grasp the display position of the first operation control according to the position of the position adjustment point, which simplifies user operations and improves the efficiency of adjustment of the display position of the operation control.

In addition, the margin between the first operation control and the boundary line of the user interface is determined according to the display size of the user interface and the ratio of the length of the progress bar on the right side of the position marker to the total length of the position adjustment progress bar. Different hardware devices have display screen of different size, user interfaces in different display screens correspond to different display sizes, and the compatibility of adjusting the operation control in different hardware devices is improved according to the margin of the display size.

Another method for adjusting the display position of the first operation control will be described below.

In some embodiments, the client adjusts the display position of the first operation control based on attribute information of the adjustment operation. Taking that the foregoing adjustment operation is a drag operation as an example, in the exemplary embodiment, the foregoing step 303 includes at least one of the following steps.
1. Obtain attribute information of a drag operation in response to the drag operation applied to the first operation control.

In the embodiments of this application, in a case that the first operation control is in the adjustable state, when detecting a drag operation applied to the first operation control, the client obtains attribute information of the drag operation. The attribute information includes, but is not limited to, at least one of: a drag distance, a drag speed, an end position of a drag operation, and the like.

The foregoing drag operation applied to the first operation control is a different operation from the foregoing trigger operation applied to the first operation control. For example, the trigger operation applied to the first operation control may be a click operation; or, the trigger operation applied to the first operation control is a slide operation with a slide distance less than a first value, and the drag operation applied to the first operation control is a drag operation with a drag distance greater than a second value, and the first value is less than or equal to the second value.

2. Determine movement parameters of the first operation control based on the attribute information.

In the embodiments of this application, after obtaining the foregoing attribute information, the client determines movement parameters of the foregoing first operation control based on the attribute information. The movement parameters include, but are not limited to, at least one of: a movement direction, a movement distance, and a position to which the first operation control is moved. The position to which the first operation control is moved is a display position of the first operation control after position adjustment.

In a possible embodiment, the foregoing movement parameters include a movement direction and a movement distance of the first operation control. The client determines a movement direction of the foregoing first operation control based on a drag direction in the foregoing attribute information; and determines a movement distance of the first operation control based on a drag distance in the foregoing attribute information.

In another possible embodiment, the foregoing movement parameters include a position to which the first operation control is moved. The client determines a position to which the foregoing first operation control is moved based on an end position of a drag operation in the foregoing attribute information.

3. Adjust a display position of the first operation control according to the movement parameters.

In the embodiments of this application, after obtaining the foregoing movement parameters, the client adjusts the display position of the first operation control in the user interface according to the movement parameters.

Based on the above, in the technical solution provided in the embodiments of this application, the display position of the operation control is adjusted through the drag operation applied to the operation control. The operation is simple, and it is unnecessary to add additional display content to the user interface, which improves the simplicity of the user interface. Moreover, the movement distance and the movement direction of the operation control are determined based on the drag distance and the drag direction, or, the display position of the operation control is determined based on the end position of the drag operation, so that the position adjustment of the operation control is intuitive and convenient, and the efficiency of the position adjustment of the operation control is improved.

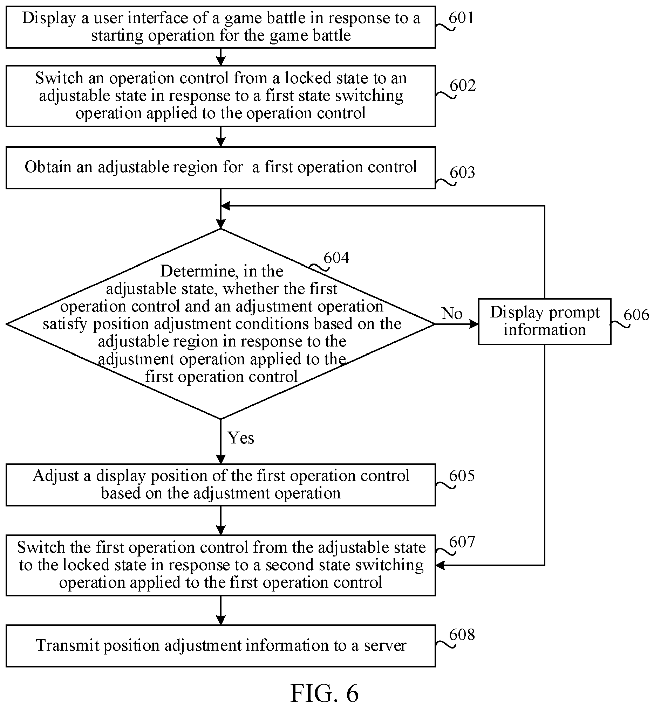

Referring to FIG. 6, a flowchart of a position adjustment method for an operation control according to another embodiment of this application is shown. The method is applicable to the terminal 10 in the running environment of the application program shown in FIG. 1. For example, an execution entity of each step may be a client of a target application program that is installed and run in the terminal 10. The method may include at least one of the following steps (601 to 606):
Step 601: Display a user interface of a game battle in response to a starting operation for the game battle.
Step 602: Switch the operation control from a locked state to an adjustable state in response to a first state switching operation applied to the operation control.

The foregoing step 601 and step 602 are the same as step 301 and step 302 in the embodiment in FIG. 3, for specific details, referring to the embodiment in FIG. 3, which are not described here again.

Step 603: Obtain an adjustable region for the first operation control.

The adjustable region refers to a moveable region of the first operation control, that is, the position of the first operation control can be flexibly adjusted within the adjustable region. In some embodiments, different operation controls correspond to different adjustable regions.

In a possible embodiment, the client determines the foregoing adjustable region based on a distance between the first operation control and another operation control. In some embodiments, when obtaining the adjustable region, the client obtains a display position of at least one operation control in the user interface, the at least one operation control include at least one other operation control and the foregoing first operation control. Further, the client determines an adjustable region for the first operation control based on the display position of the at least one operation control. A distance between an edge line of the adjustable region and another operation control closest to the edge line is greater than a threshold. In this case, the adjustable region of the first operation control does not cover display positions of other operation controls, that is, there is no overlapping region between the display positions of the operation controls, so that the user interface is tidier.

In another possible embodiment, the client determines the foregoing adjustable region based on trigger regions of other operation controls. In some embodiments, when obtaining the adjustable region, the client obtains trigger regions of other operation controls than the foregoing first operation control in the user interface, and takes a region that does not overlap with the trigger regions of the other operation controls in the user interface as an adjustable region for the first operation control. Different operation controls correspond to different trigger regions, and the foregoing trigger region may also be referred to as a response region. Of course, in an exemplary embodiment, the trigger region of the first operation control changes along with display position of the first operation control. Therefore, the adjustable region of the first operation control also changes along with the display position of the first operation control. In this case, the adjustable region of the first operation control will not cover the trigger regions of other operation controls, which reduces mistaken touch operations for other operation controls during the position adjustment of the first operation control.

Step 604: Determine, in the adjustable state, whether the first operation control and the adjustment operation satisfy position adjustment conditions based on the adjustable region in response to an adjustment operation applied to the first operation control. In a case that both the first operation control and the adjustment operation satisfy the position adjustment conditions, step 605 is performed. In a case that the first operation control or the adjustment operation does not satisfy the position adjustment conditions, step 606 is performed.

In the embodiments of this application, in a case that the first operation control is in the adjustable state, when detecting an adjustment operation applied to the first operation control, the client determines whether the first operation control and the adjustment operation satisfy the position adjustment conditions based on the foregoing adjustable region.

In some embodiments, in a case that the foregoing first operation control is not on an edge line of the adjustable region; or, the first operation control is on the edge line of the adjustable region, and the position adjustment operation instructs the first operation control to move from the edge line of the adjustable region to the interior of the adjustable region, it is determined that the first operation control and the adjustment operation satisfy the position adjustment conditions.

In some embodiments, in a case that the first operation control is on the edge line of the adjustable region, and the position adjustment operation instructs the first operation control to move from the edge line of the adjustable region to the exterior of the adjustable region, it is determined that the first operation control or the adjustment operation does not satisfy the position adjustment conditions.

A method for determining whether the first operation control is on the edge line will be described below. In some embodiments, in a case that an edge point of the first operation control is on the edge line, it is determined that the first operation control is on the edge line; or, in a case that a center point of the first operation control is on the edge line, it is determined that the first operation control is on the edge line.

Step 605: Adjust a display position of the first operation control based on the adjustment operation.

In the embodiments of this application, in a case that the first operation control and the adjustment operation satisfy the position adjustment conditions, in the adjustable state, in response to the foregoing adjustment operation, a display position of the first operation control is adjusted.

Step 606: Display prompt information.

In the embodiments of this application, in a case that the first operation control and the adjustment operation do not satisfy the position adjustment conditions, in the adjustable state, in response to the foregoing adjustment operation, prompt information is displayed. The prompt information is used for prompting that the position adjustment of the first operation control fails.

Step 607: Switch the first operation control from the adjustable state to the locked state in response to a second state switching operation applied to the first operation control.

Step 608: Transmit position adjustment information to a server.

Based on the above, in the technical solutions provided in the embodiments of this application, the operation control is limited to move within the adjustable region, which avoids the unusable problem caused by overlapping of the trigger region of the operation control and trigger regions of other operation controls after the operation control is moved, and improving a position adjustment effect of the operation control.

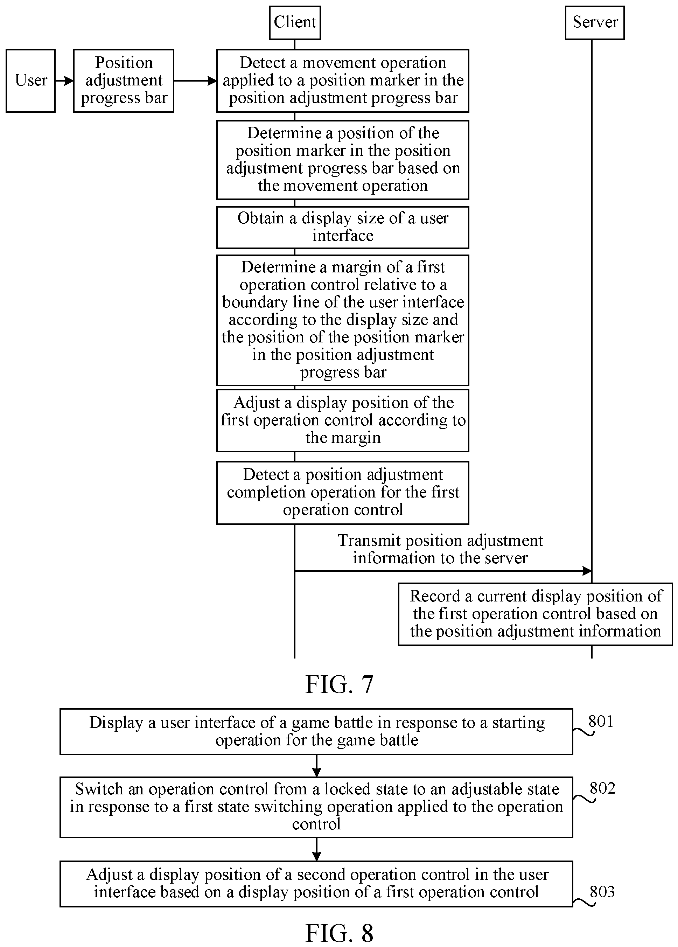

In addition, with reference to FIG. 7, an adjustment method for the first operation control in this application will be described. At the client, the user adjusts the display position of the first operation control through the position adjustment progress bar, and the client receives a movement operation applied to the position marker in the position adjustment progress bar, determines a position of the position marker in the position adjustment progress bar based on the movement operation, obtains a display size of the user interface, determines a margin of the first operation control relative to the boundary line of the user interface according to the display size and the position of the position marker in the position adjustment progress bar, and adjusts the display position of the first operation control according to the margin. Further, the client detects a position adjustment completion operation (the foregoing second state switching operation) for the first operation control, and transmits position adjustment information to a server. The position adjustment information includes a current display position of the first operation control, and the server records the current display position of the first operation control based on the position adjustment information.

Referring to FIG. 8, a flowchart of a position adjustment method for an operation control according to still another embodiment of this application is shown. The method is applicable to the terminal 10 in the running environment of the application program shown in FIG. 1. For example, an execution entity of each step may be a client of a target application program that is installed and run in the terminal 10. The method may include at least one of the following steps (801 to 806):
Step 801: Display a user interface of a game battle in response to a starting operation for the game battle.
Step 802: Switch the operation control from a locked state to an adjustable state in response to a first state switching operation applied to the operation control.

The foregoing step 801 and step 802 are the same as step 301 and step 302 in the embodiment in FIG. 3, for specific details, referring to the embodiment in FIG. 3, which are not described here again.

Step 803: Adjust a display position of a second operation control in the user interface based on a display position of a first operation control.

In the embodiments of this application, after adjusting the display position of the first operation control, the client takes the adjusted display position of the first operation control as a reference, and adjusts a display position of a second operation control in the user interface based on the display position of the first operation control.

In a possible embodiment, the foregoing second operation control and the first operation control belong to the same group of operation controls. In this case, the client adjusts the display position of the second operation control based on the display position of the first operation control and a relative position between the first operation control and the second operation control, so that the relative position between the first operation control and the second operation control is kept unchanged after position adjustment.

In another possible embodiment, the foregoing second operation control and the foregoing first operation control belong to different groups of operation controls. In this case, the client adjusts a margin of the second operation control relative to the boundary line of the user interface based on the margin of the first operation control relative to the boundary line of the user interface. In some embodiments, in a case that a boundary line for the first operation control and a boundary line for the second operation control are the same boundary line, the sum of a margin of the first operation control relative to the boundary line of the user interface and a margin of the second operation control relative to the boundary line of the user interface is equal to a display length of the user interface. In a case that the boundary line for the first operation control and the boundary line for the second operation control are boundary lines parallel to each other, a margin of the first operation control relative to the boundary line of the user interface is equal to a margin of the second operation control relative to the boundary line of the user interface.

In some embodiments, the client groups operation controls based on functions and/or distribution regions of the operation controls.

In a possible embodiment, the client groups operation controls based on functions of the operation controls. In some embodiments, after displaying the foregoing user interface, the client obtains functions of operation controls, and divides operation controls with the same function into a group. For example, operation controls configured to cast a skill belong to the same group of operation controls, operation controls configured to control posture switching belong to the same group of operation controls, and operation controls configured to control movement directions belong to the same group of operation controls.

In another possible embodiment, the client groups operation controls based on distribution regions of the operation controls. In some embodiments, after displaying the foregoing user interface, the client obtains the distribution of operation controls, and divides operation controls distributed in the same region into a group. For example, when determining whether the operation controls are distributed in the same region, the client randomly selects an operation control, determines other operation controls whose distances to the operation control are less than a threshold as operation controls belonging to the same group as the operation control, and continues to select an operation control from ungrouped operation controls to repeat the foregoing step until no ungrouped operation control is left.

In still another possible embodiment, the client groups operation controls based on functions and distribution regions of the operation controls. For example, the client groups operation controls based on distribution regions of the operation controls, and on the basis of the obtained groups, subdivides the existing groups according to functions of the operation controls to obtain final grouping results.

Based on the above, in the technical solutions provided in the embodiments of this application, during position adjustment of the operation control, the display position of the second operation control is also subjected to adaptive adjustment, which improves the efficiency of adjustment of the operation control.

In this application, with regard to a distance between two, unless otherwise specified, a distance may be calculated according to center points of the two, or a distance may be calculated according to edge points of the two, which is not defined in the embodiments of this application.

Apparatus embodiments of this application will be described below, which may be configured to perform the method embodiments of this application. With regard to details not disclosed in the apparatus embodiments of this application, refer to the method embodiments of this application.

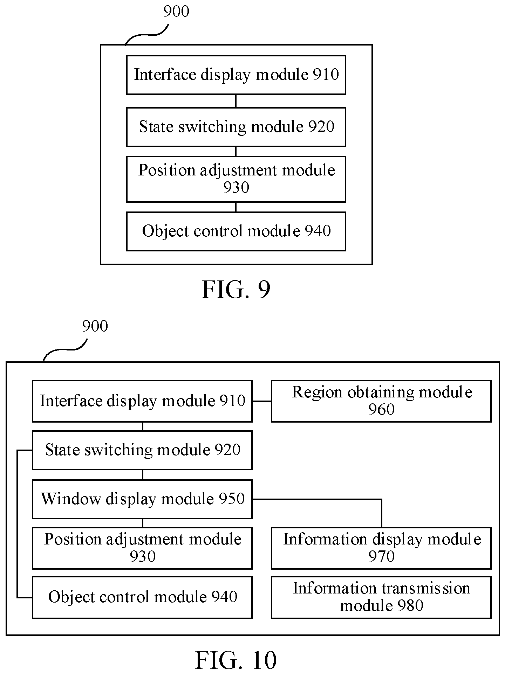

Referring to FIG. 9, a block diagram of a position adjustment apparatus for an operation control according to an embodiment of this application is shown. The apparatus has the function of implementing the foregoing position adjustment method for an operation control, and the function may be implemented by hardware, or may be implemented by executing corresponding software by hardware. The apparatus may be a terminal, or may be arranged in a terminal. The apparatus 900 may include an interface display module 910, a state switching module 920, a position adjustment module 930, and an object control module 940.

The interface display module 910 is configured to display a user interface of a game battle in response to a starting operation for the game battle, the user interface displaying at least one operation control.

The state switching module 920 is configured to switch the operation control from a locked state to an adjustable state in response to a first state switching operation applied to the operation control.

The position adjustment module 930 is configured to adjust, in the adjustable state, a display position of a first operation control in response to an adjustment operation applied to the first operation control of the at least one operation control.

The object control module 940 is configured to control, in the adjustable state, a virtual object in the game battle to perform an action associated with the first operation control in response to a trigger operation applied to the first operation control.

In an exemplary embodiment, as shown in FIG. 10, the apparatus 900 further includes: a window display module 950.

The window display module 950 is configured to display an adjustment window in response to the first state switching operation applied to the operation control, the adjustment window containing a position adjustment control configured to adjust a display position of the operation control.

In an exemplary embodiment, the position adjustment module 930 is further configured to, in response to an operation applied to the position adjustment control, adjust the display position of the first operation control.

In an exemplary embodiment, the position adjustment control includes a position adjustment progress bar, and the position adjustment progress bar displays a position marker. The position adjustment module 930 is further configured to determine a position of the position marker in the position adjustment progress bar in response to a movement operation applied to the position marker; determine a margin of the first operation control relative to a boundary line of the user interface according to the position of the position marker in the position adjustment progress bar; and adjust a display position of the first operation control, so that a distance between the first operation control and the boundary line of the user interface is equal to the margin.

In an exemplary embodiment, the position adjustment module 930 is further configured to obtain a display size of the user interface; take the position marker as a division point, and determine a ratio of a length of a progress bar on the right side of the position marker to a total length of the position adjustment progress bar; and determine a margin of the first operation control relative to a boundary line of the user interface according to the ratio and the display size.

In an exemplary embodiment, the position adjustment module 930 is further configured to obtain attribute information of a drag operation in response to the drag operation applied to the first operation control; determine movement parameters of the first operation control based on the attribute information, the movement parameters including at least one of: a movement direction, a movement distance, and a position to which the first operation control is moved; and adjust a display position of the first operation control according to the movement parameters.

In an exemplary embodiment, the position adjustment module 930 is configured to determine a movement direction of the first operation control based on a drag direction in the attribute information; determine a movement distance of the first operation control based on a drag distance in the attribute information; or, determine a position to which the first operation control is moved based on an end position of the drag operation in the attribute information.

In an exemplary embodiment, as shown in FIG. 10, the apparatus 900 further includes: a region obtaining module 960 and an information display module 970.

The region obtaining module 960 is configured to obtain an adjustable region for the first operation control.

The position adjustment module 930 is further configured to perform the operation of adjusting, in the adjustable state, a display position of a first operation control in response to an adjustment operation applied to the first operation control of the at least one operation control in a case that the first operation control is not on an edge line of the adjustable region; or perform the operation of adjusting, in the adjustable state, a display position of a first operation control in response to an adjustment operation applied to the first operation control of the at least one operation control in a case that the first operation control is on the edge line of the adjustable region and the position adjustment operation instructs the first operation control to move from the edge line of the adjustable region to the interior of the adjustable region.

The information display module 970 is configured to display, in the adjustable state, prompt information in response to an adjustment operation applied to the first operation control of the at least one operation control in a case that the first operation control is on an edge line of the adjustable region, and the position adjustment operation instructs the first operation control to move from the edge line of the adjustable region to the exterior of the adjustable region, the prompt information being used for prompting that the position adjustment of the first operation control fails.

In an exemplary embodiment, the region obtaining module 960 is further configured to obtain a display position of the at least one operation control in the user interface, the at least one operation control including at least one other operation control and the first operation control; and determine an adjustable region for the first operation control based on the display position of the at least one operation control. A distance between an edge line of the adjustable region and another operation control closest to the edge line is greater than a threshold.

In an exemplary embodiment, the region obtaining module 960 is further configured to obtain trigger regions of other operation controls than the first operation control in the user interface; and take a region that does not overlap with the trigger regions of the other operation controls in the user interface as an adjustable region for the first operation control.

In an exemplary embodiment, the position adjustment module 930 is further configured to adjust a display position of a second operation control in the user interface based on the display position of the first operation control.

In an exemplary embodiment, the position adjustment module 930 is further configured to adjust a display position of the second operation control based on the display position of the first operation control and a relative position between the first operation control and the second operation control in a case that the second operation control and the first operation control belong to the same group of operation controls; or, adjust a margin of the second operation control relative to the boundary line of the user interface based on the margin of the first operation control relative to the boundary line of the user interface in a case that the second operation control and the first operation control belong to different groups of operation controls.

In an exemplary embodiment, as shown in FIG. 10, the apparatus 900 further includes: an information transmission module 980.

The state switching module 920 is further configured to switch the first operation control from the adjustable state to the locked state in response to a second state switching operation applied to the first operation control.

The information transmission module 980 is configured to transmit position adjustment information to a server, the position adjustment information being used for instructing the server to record a current display position of the first operation control.

Based on the above, in the technical solutions provided in the embodiments of this application, the operation control is switched from the locked state to the adjustable state through the first state switching operation, and in the adjustable state, the display position of the operation control can be adjusted in response to the adjustment operation and the virtual object can be controlled to perform the corresponding action in response to the trigger operation. That is, in a case that a user adjusts the display position of the operation control, the operation control can respond to user's trigger operation, so that the user can control the virtual object. In this way, after adjusting the display position of the operation control, the user can use the operation control in real time and then determine whether the use feel of the operation control meets user's needs. Furthermore, during use of the operation control, the operation control is still in the adjustable state, and in a case that the user is not satisfied with a previous position adjustment result, the user may continue to adjust the display position of the operation control without reopening a setting interface of the operation control, which improves the efficiency of position adjustment of the operation control. Moreover, during position adjustment, the operation feel of the operation control is determined by using the operation control in real time, which is conductive to the optimization of a position adjustment effect on the operation control.

The apparatus provided in the foregoing embodiments, when implementing its functions, is described by taking the division of the foregoing functional modules as an example. In practice, the foregoing functions may be assigned to and completed by different functional modules as needed, that is, an internal structure of the device is divided into different functional modules to complete all or part of the foregoing functions. In addition, the apparatus provided in the foregoing embodiments and the method embodiments belong to the same concept, and for the specific implementation process of the apparatus, refer to the method embodiments for details, which is not described again here.

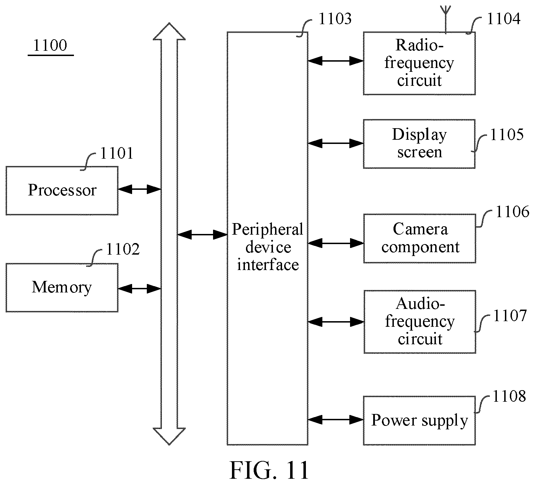

Referring to FIG. 11, a structural block diagram of a terminal 1100 according to an embodiment of this application is shown. The terminal 1100 may be, for example, an electronic device such as a mobile phone, a tablet computer, a game console, an e-book reader, a multimedia playback device, a wearable device, and a personal computer (PC). The terminal is configured to implement the position adjustment method for an operation control provided in the foregoing embodiments. The terminal may be the terminal 10 in the game running environment shown in FIG. 1.

Usually, the terminal 1100 includes: a processor 1101 and a memory 1102.

The processor 1101 may include one or more processing cores, such as a 4-core processor and 8-core processor. The processor 1101 may be implemented by using at least one hardware form of digital signal processing (DSP), field programmable gate array (FPGA), and programmable logic array (PLA). The processor 1101 may also include a main processor and a co-processor. The main processor is a processor for processing data in a wakeup state, which is also referred to as a central processing unit (CPU). The co-processor is a low power processor for processing data in a standby state. In some embodiments, the processor 1101 may be integrated with a graphics processing unit (GPU). The GPU is configured to render and draw the content to be displayed by a display screen. In some embodiments, the processor 1101 may further include an artificial intelligence (AI) processor. The AI processor is configured to process computing operations related to machine learning.

The memory 1102 may include one or more computer-readable storage media. The computer-readable storage media may be non-transient. The memory 1102 may further include a high speed random access memory and a non-volatile memory, such as one or more disk storage devices and flash storage devices. In some embodiments, the non-transient computer-readable storage media in the memory 1102 are configured to store at least one instruction, at least one fragment of program, a code set or an instruction set. The at least one instruction, the at least one fragment of program, the code set or the instruction set is executed by one or more processors to implement the foregoing position adjustment method for an operation control.

In some embodiments, the terminal 1100 may further include: a peripheral device interface 1103 and at least one peripheral device. The processor 1101, the memory 1102, and the peripheral device interface 1103 may be connected via a bus or signal lines. Each peripheral device may be connected to the peripheral device interface 1103 via a bus, signal lines or a circuit board. Specifically, the peripheral devices include at least one of: a radio frequency circuit 1104, a display screen 1105, a camera component 1106, an audio circuit 1107, and a power supply 1108.

Those skilled in the art will appreciate that the structure shown in FIG. 11 is not intended to limit the terminal 1100, the terminal 1100 may include more or fewer components than those shown in the figure, or certain components are combined, or different component arrangements are adopted.

In an exemplary embodiment, a computer-readable storage medium is further provided. The storage medium stores at least one instruction, at least one program, a code set or an instruction set, and when the at least one instruction, the at least one program, the code set or the instruction set is executed by a processor, the foregoing position adjustment method for an operation control is implemented.

In some embodiments, the computer-readable storage medium may include: a read only memory (ROM), a random access memory (RAM), a solid state drive (SSD), an optical disc or the like. The random access memory may include a resistance random access memory (ReRAM) and a dynamic random access memory (DRAM).

In an exemplary embodiment, a computer program product or computer program is further provided. The computer program product or computer program includes computer instructions, and the computer instructions are stored in a computer-readable storage medium. A processor of a terminal reads the computer instructions from the computer-readable storage medium and executes the computer instructions to cause the terminal to perform the foregoing position adjustment method for an operation control.

## Claims

1. A method for position adjustment of an operation control, performed by a terminal and comprising:
displaying a user interface of a game battle in response to a starting operation for the game battle, wherein at least one operation control is displayed in the user interface;
switching the at least one operation control from a locked state to an adjustable state in response to a first state switching operation applied to the respective operation control;
adjusting, in the adjustable state, a display position of a first operation control of the at least one operation control in response to an adjustment operation applied to the first operation control; and
controlling, in the adjustable state, a virtual object in the game battle to perform an action associated with the first operation control in response to a trigger operation applied to the first operation control.

2. The method according to claim 1, further comprising:
displaying an adjustment window in response to the first state switching operation, the adjustment window containing a position adjustment control configured to adjust a display position of the operation control; and
wherein the adjusting a display position of a first operation control of the at least one operation control in response to an adjustment operation applied to the first operation control comprises:
adjusting the display position of the first operation control in response to an operation applied to the position adjustment control.

3. The method according to claim 2, wherein the position adjustment control comprises a position adjustment progress bar with a position marker; and
the adjusting the display position of the first operation control in response to an operation applied to the position adjustment control comprises:
determining a position of the position marker in the position adjustment progress bar in response to a movement operation applied to the position marker;
determining a margin of the first operation control relative to a boundary line of the user interface according to the position of the position marker in the position adjustment progress bar; and
adjusting the display position of the first operation control, so that a distance between the first operation control and the boundary line of the user interface is equal to the margin.

4. The method according to claim 3, wherein the determining a margin of the first operation control relative to a boundary line of the user interface according to the position of the position marker in the position adjustment progress bar comprises:
obtaining a display size of the user interface;
determining, by taking the position marker as a division point, a ratio of a length of a progress bar on the right side of the position marker to a total length of the position adjustment progress bar; and
determining the margin of the first operation control relative to the boundary line of the user interface according to the ratio and the display size.

5. The method according to claim 1, wherein the adjusting a display position of a first operation control of the at least one operation control in response to an adjustment operation applied to the first operation control comprises:
obtaining attribute information of a drag operation applied to the first operation control in response to the drag operation;
determining movement parameters of the first operation control based on the attribute information, the movement parameters comprising at least one of: a movement direction, a movement distance, and a position to which the first operation control is moved; and
adjusting the display position of the first operation control according to the movement parameters.

6. The method according to claim 5, wherein the determining movement parameters of the first operation control based on the attribute information comprises:
determining the movement direction of the first operation control based on a drag direction in the attribute information; and determining the movement distance of the first operation control based on a drag distance in the attribute information;
or,
determining the position to which the first operation control is moved based on an end position of the drag operation in the attribute information.

7. The method according to any one of claims 1 to 6, wherein after the switching the operation control from a locked state to an adjustable state, the method further comprises:
obtaining an adjustable region for the first operation control;
performing the operation of adjusting, in the adjustable state, the display position of the first operation control of the at least one operation control in response to the adjustment operation applied to the first operation control in a case that the first operation control is not on an edge line of the adjustable region; or, performing the operation of adjusting, in the adjustable state, the display position of the first operation control of the at least one operation control in response to the adjustment operation applied to the first operation control in a case that the first operation control is on the edge line of the adjustable region and the position adjustment operation instructs the first operation control to move from the edge line of the adjustable region to the interior of the adjustable region; and
displaying, in the adjustable state, prompt information in response to the adjustment operation applied to the first operation control of the at least one operation control in a case that the first operation control is on the edge line of the adjustable region and the position adjustment operation instructs the first operation control to move from the edge line of the adjustable region to the exterior of the adjustable region, the prompt information being used for prompting that the position adjustment of the first operation control fails.

8. The method according to claim 7, wherein the obtaining an adjustable region for the first operation control comprises:
obtaining a display position of the at least one operation control in the user interface, the at least one operation control comprising at least one other operation control and the first operation control; and
determining the adjustable region for the first operation control based on the display position of the at least one operation control, a distance between the edge line of the adjustable region and another operation control closest to the edge line being greater than a threshold.

9. The method according to claim 7, wherein the obtaining an adjustable region for the first operation control comprises:
obtaining trigger regions of other operation controls than the first operation control in the user interface; and
taking a region that does not overlap with the trigger regions of the other operation controls in the user interface as the adjustable region for the first operation control.

10. The method according to any one of claims 1 to 6, wherein after the adjusting a display position of a first operation control, the method further comprises:
adjusting a display position of a second operation control in the user interface based on the display position of the first operation control.

11. The method according to claim 10, wherein the adjusting a display position of a second operation control in the user interface based on the display position of the first operation control comprises:
adjusting the display position of the second operation control based on the display position of the first operation control and a relative position between the first operation control and the second operation control in a case that the second operation control and the first operation control belong to the same group of operation controls;
or,
adjusting a margin of the second operation control relative to the boundary line of the user interface based on the margin of the first operation control relative to the boundary line of the user interface in a case that the second operation control and the first operation control belong to different groups of operation controls.

12. The method according to any one of claims 1 to 6, wherein after the adjusting a display position of a first operation control, the method further comprises:
switching the first operation control from the adjustable state to the locked state in response to a second state switching operation applied to the first operation control; and
transmitting position adjustment information to a server, the position adjustment information being used for instructing the server to record a current display position of the first operation control.

13. An apparatus for position adjustment of an operation control, comprising:
an interface display module, configured to display a user interface of a game battle in response to a starting operation for the game battle, wherein at least one operation control is displayed in the user interface;
a state switching module, configured to switch the at least one operation control from a locked state to an adjustable state in response to a first state switching operation applied to the respective operation control;
a position adjustment module, configured to adjust, in the adjustable state, a display position of a first operation control of the at least one operation control in response to an adjustment operation applied to the first operation control; and
an object control module, configured to control, in the adjustable state, a virtual object in the game battle to perform an action associated with the first operation control in response to a trigger operation applied to the first operation control.

14. The apparatus according to claim 13, further comprising:
a window display module, configured to display an adjustment window in response to the first state switching operation applied to the operation control, the adjustment window containing a position adjustment control configured to adjust a display position of the operation control, and
the position adjustment module, further configured to adjust the display position of the first operation control in response to an operation applied to the position adjustment control.

15. The apparatus according to claim 14, wherein the position adjustment control comprises a position adjustment progress bar with a position marker; and
the position adjustment module is further configured to:
determine a position of the position marker in the position adjustment progress bar in response to a movement operation applied to the position marker;
determine a margin of the first operation control relative to a boundary line of the user interface according to the position of the position marker in the position adjustment progress bar; and
adjust the display position of the first operation control, so that a distance between the first operation control and the boundary line of the user interface is equal to the margin.

16. The apparatus according to claim 15, wherein the position adjustment module is further configured to:
obtain a display size of the user interface;
determine, by taking the position marker as a division point, a ratio of a length of a progress bar on the right side of the position marker to a total length of the position adjustment progress bar; and
determine, a margin of the first operation control relative to a boundary line of the user interface according to the ratio and the display size.

17. The apparatus according to claim 13, wherein the position adjustment module is further configured to:
obtain attribute information of a drag operation applied to the first operation control in response to the drag operation;
determine movement parameters of the first operation control based on the attribute information; and
adjust the display position of the first operation control according to the movement parameters.

18. The apparatus according to claim 17, wherein the position adjustment module is further configured to:
determine a movement direction of the first operation control based on a drag direction in the attribute information; and determine a movement distance of the first operation control based on a drag distance in the attribute information, the movement parameters comprising the movement direction and the movement distance;
or,
determine a position to which the first operation control is moved based on an end position of the drag operation in the attribute information, the movement parameters comprising the position to which the first operation control is moved.

19. The apparatus according to any one of claims 13 to 18, further comprising:
a region obtaining module, configured to obtain an adjustable region for the first operation control, and
the position adjustment module, further configured to perform the operation of adjusting, in the adjustable state, a display position of a first operation control in the at least one operation control in response to an adjustment operation applied to the first operation control in a case that the first operation control is not on an edge line of the adjustable region; or, perform the operation of adjusting, in the adjustable state, a display position of a first operation control in the at least one operation control in response to an adjustment operation applied to the first operation control in a case that the first operation control is on the edge line of the adjustable region and the position adjustment operation instructs the first operation control to move from the edge line of the adjustable region to the interior of the adjustable region; and
an information display module, configured to display, in the adjustable state, prompt information in response to the adjustment operation applied to the first operation control in the at least one operation control in a case that the first operation control is on the edge line of the adjustable region and the position adjustment operation instructs the first operation control to move from the edge line of the adjustable region to the exterior of the adjustable region, the prompt information being used for prompting that the position adjustment of the first operation control fails.

20. The apparatus according to claim 19, wherein the region obtaining module is further configured to:
obtain a display position of the at least one operation control in the user interface, the at least one operation control comprising at least one other operation control and the first operation control; and
determine an adjustable region for the first operation control based on the display position of the at least one operation control, a distance between the edge line of the adjustable region and another operation control closest to the edge line being greater than a threshold.

21. The apparatus according to claim 19, wherein the region obtaining module is further configured to:
obtain trigger regions of other operation controls than the first operation control in the user interface; and
take a region that does not overlap with the trigger regions of the other operation controls in the user interface as an adjustable region for the first operation control.

22. The apparatus according to any one of claims 13 to 18, wherein the position adjustment module is further configured to adjust a display position of a second operation control in the user interface based on the display position of the first operation control.

23. The apparatus according to claim 22, wherein the position adjustment module is further configured to:
adjust the display position of the second operation control based on the display position of the first operation control and a relative position between the first operation control and the second operation control in a case that the second operation control and the first operation control belong to the same group of operation controls;
or,
adjust a margin of the second operation control relative to the boundary line of the user interface based on the margin of the first operation control relative to the boundary line of the user interface in a case that the second operation control and the first operation control belong to different groups of operation controls.

24. The apparatus according to any one of claims 13 to 18, further comprising:
the state switching module, further configured to switch the first operation control from the adjustable state to the locked state in response to a second state switching operation applied to the first operation control; and
an information transmission module, configured to transmit position adjustment information to a server, the position adjustment information being used for instructing the server to record a current display position of the first operation control.

25. A terminal, comprising a processor and a memory, the processor storing at least one fragment of program, and the at least one fragment of program being loaded and executed by the processor to perform the position adjustment method for an operation control according to any one of claims 1 to 12.

26. A computer-readable storage medium, storing at least one fragment of program, the at least one fragment of program being loaded and executed by a processor to perform the position adjustment method for an operation control according to any one of claims 1 to 12.

27. A computer program product, comprising computer instructions, the computer instructions being stored in a computer-readable storage medium, and a processor of a terminal reading the computer instructions from the computer-readable storage medium and executing the computer instructions to perform the position adjustment method for an operation control according to any one of claims 1 to 12.
